# EUROPEAN PATENT SPECIFICATION

(11) **EP 3 809 815 B1**
(45) Date of publication and mention of the grant of the patent: **29.01.2025**
(21) Application number: 18830439.8
(22) Date of filing: 17.12.2018
(51) Int. Cl.: A01D 46/247

(54) **FRUIT HARVESTING TOOL**
OBSTERNTEGERÄT
OUTIL DE RÉCOLTE DE FRUITS

(30) Priority: 21.06.2018 DE 102018004933
(43) Date of publication of application: 28.04.2021
(73) Proprietor: HUSQVARNA AB, 561 82 Huskvarna (SE)
(72) Inventor: RENNER, Thomas, 89079 Ulm (DE); KLOOS, Michaela, 89171 Illerkirchberg (DE)
(74) Representative: Finkele, Rolf
(86) International application number: PCT/EP2018/085238
(87) International publication number: WO 2019/242870

(56) References cited:
- DE-C- 209 799
- DE-U1- 202009 014 926
- US-A- 291 792
- US-A- 363 078

## Description

### TECHNICAL FIELD

The present disclosure relates to a hand-held fruit harvesting tool, and more particularly to a fruit plucking attachment for the hand-held fruit harvesting tool.

### BACKGROUND

Hand-held harvesting tools have been well known in the art for their use in facilitating harvesters to pluck and retrieve produce, for example, fruits from branches of shrubs and trees. In some cases, these harvesting tools have been conventionally designed for use in plucking fruits that are of a specific size. Thus, a single conventionally designed harvesting tool may not be usable for plucking and retrieving fruits of different sizes, or to state the alternative, such a single conventionally designed harvesting tool may not be usable for plucking and retrieving different types of fruits, for example, berries and apples.

DE 20 2009 014 926 U1, hereinafter referred to as "the '926 reference" discloses the use of a crown on bag of a hand-operated harvesting tool. The crown disclosed in the '926 reference is upright about a central axis of the bag and has gripping fingers on a first side and a second side, each of which are disposed in an upright manner. Due to the upright positioning of the gripping fingers and an opening between such upright gripping fingers on the crown, the harvesting tool of the '926 reference may be cumbersome to operate and may therefore, become unergonomic for use in harvesting fruits.

Hence, there is a need for an improved and ergonomic harvesting tool that overcomes the aforementioned drawbacks while providing versatility in that the harvesting tool should be adaptable for use in plucking fruits of different sizes, or to state the alternative, in plucking different types of fruits.

### SUMMARY

In view of the above, it is an objective of the present invention to solve or at least reduce the drawbacks discussed above. The objective is at least partially achieved by a fruit harvesting tool, according to an embodiment of the present invention. The fruit harvesting tool of the invention is defined by independent claim 1. Particular embodiments of the invention are defined in the dependent claims.

By providing a fruit plucking attachment that can be selectively rotated into its first position or its second position, the first comb or the second comb becomes disposed into the arcuate opening and each of these combs can be used to pluck fruits of a specific size that are different from one another thereby providing versatility in plucking different sizes of fruits, or to state the alternative, different types of fruits, for example, berries and apples.

According to an embodiment of the present invention, the attachment portion on the top end of the container and the attachment portion on the fruit plucking attachment together define a snap fit arrangement. By embodying the attachment portions on the top end of the container and the fruit plucking attachment into a snap fit arrangement, the fruit plucking attachment can be easily and quickly attached to, or detached from the top end of the container.

According to a preferred embodiment of the present invention, the at least one snap fit arrangement defined in the top end of the container includes a socket. Alternatively, the at least one snap fit feature defined in the top end of the container could include a plurality of sockets. By providing multiple sockets in lieu of a single socket, it is envisioned that the fruit plucking attachment can be secured firmly to the top end of the container.

The fruit plucking attachment can be regarded as being disposed is in its first position when the first plug is engaged with the first socket and the second plug is engaged with the second socket. Conversely, the fruit plucking attachment can be regarded as being disposed in its second position when the first plug is engaged with the second socket and the second plug is engaged with the first socket. This interchangeability of the fruit plucking attachment into its first and second positions allows for flexibility to pluck fruits of different sizes, or to state the alternative, to pluck fruits of different types, for example, berries and apples.

According to an embodiment of the present invention, the first comb is structured to define a first set of tines such that adjacently located tines from the first set of tines are spaced apart at a first pre-determined amount of distance from one another. Also, the second comb is structured to define a second set of tines such that adjacently located tines from the second set of tines are spaced apart at a second pre-determined amount of distance from one another.

According to an embodiment of the present invention, the fruit plucking attachment comprises a second laminate secured to the first laminate with the help of notches. Further, the second laminate is sized to project forwardly of the first and second sets of tines and terminate prior to ends of the first and second sets of tines. By providing the second laminate, a connection between the fruit and a branch of a tree or a shrub can be severed easily.

According to an embodiment of the present invention, an inner surface of the top end of the container is adapted to define a groove thereon. This groove is adapted to arcuately extend from the first socket to the second socket. Also, this groove is adapted to facilitate movement of one of the first and second plugs when the fruit plucking attachment is disposed between its first and second positions.

According to an embodiment of the present invention, the fruit plucking attachment may further include third and fourth combs located in a diametrically opposing relation to the first and second combs. By increasing a number of combs in the fruit plucking attachment, harvesters can beneficially pluck fruits of several sizes.

Embodiments of the present invention are also directed towards the fruit plucking attachment. According to a non-claimed embodiment of the present invention, this fruit plucking attachment may be manufactured using a three-dimensional (3-D) printing process. A user of the fruit plucking attachment may be provided with a data file having pre-stored instructions to print the fruit plucking attachment using a three-dimensional (3-D) printer. In order to do so, the fruit plucking attachment may be presented in digital format.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a side perspective view of a fruit harvesting tool having a container and a fruit plucking attachment, in accordance with an embodiment of the present invention;
**FIG. 2** shows an exploded view of the fruit harvesting tool of FIG. 1 with the fruit plucking attachment just prior to being engaged with the container, in accordance with an embodiment of the present invention;
**FIG. 3** shows a side perspective sectional view of the fruit harvesting tool with the fruit plucking attachment being disposed in between its first and second positions, in accordance with an embodiment of the present invention;
**FIG. 4** shows a bottom perspective sectional view of the fruit harvesting tool showing an inner surface of a top end of the container, in accordance with an embodiment of the present invention;
**FIG. 5** shows a bottom view of the container having an arcuate groove defined on the inner surface of the top end of the container, in accordance with an embodiment of the present invention;
**FIG. 6** shows a top view of the fruit plucking attachment, in accordance with an embodiment of the present invention;
**FIG. 7** shows a top view of the fruit plucking attachment, in accordance with another embodiment of the present invention;
**FIG. 8** shows a top view of the fruit plucking attachment, in accordance with yet another embodiment of the present invention;
**FIG. 9** shows a bottom perspective view of the fruit plucking attachment showing a first laminate and a second laminate, in accordance with yet another embodiment of the present invention;
**FIG. 10** shows a top view of the fruit plucking attachment from **FIG. 9**, in accordance with yet another embodiment of the present invention; and
**FIGS. 11-12** show perspective views of the fruit harvesting tool illustrating different states in the positioning of the fruit plucking attachment when the fruit plucking attachment is moved from its first position to its second position.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as being limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

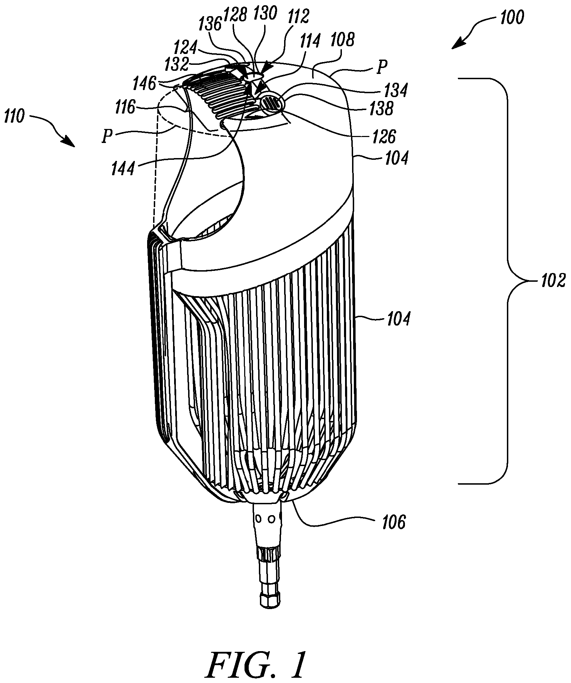

**FIG. 1** shows a perspective view of a fruit harvesting tool **100,** according to an embodiment of the present invention. As shown, the fruit harvesting tool **100** includes a container **102** that has a circumferential wall **104** extending between a closed bottom end **106** and a top end **108** of the container **102.** Each of the circumferential wall **104** and the top end **108** are configured to define at least a portion of an arcuate opening **110.** This arcuate opening **110** extends along a perimeter **P** of the container **102** between the circumferential wall **104** and the top end **108.**

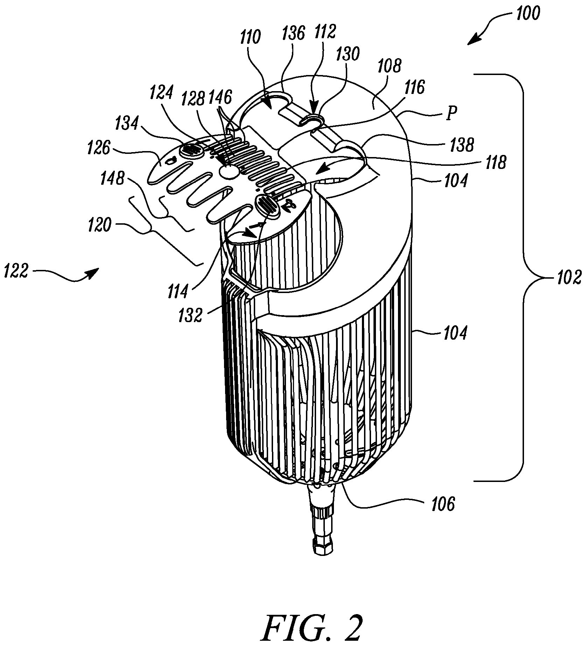

The top end **108** of the container **102** is also adapted to define an attachment portion **112** that is located adjacent to the arcuate opening **110.** A fruit plucking attachment **114** is selectively engaged with the top end **108** of the container **102.** As shown in **FIG. 2****,** the fruit plucking attachment **114** comprises a first comb **116** at a first side **118** and a second comb **120** at a second side **122.**

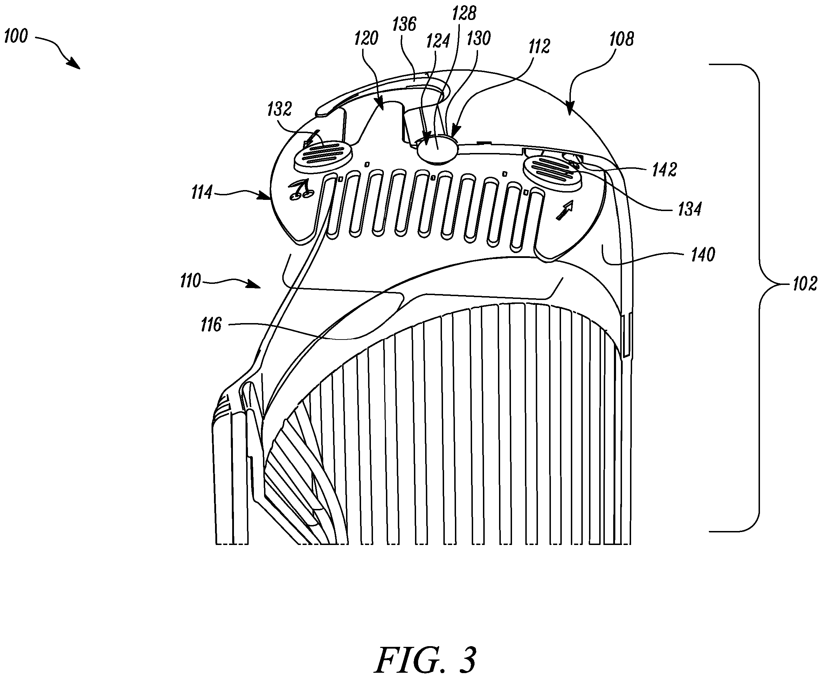

With reference to **FIGS. 2** and **3****,** the fruit plucking attachment **114** further comprises another attachment portion **124** located thereon to correspond with the attachment portion **112** defined by the top end **108** of the container **102** such that the fruit plucking attachment **114** is selectively rotatable between a first position and a second position to allow one of the first comb **116** and the second comb **120** to be disposed into the arcuate opening **110.**

Referring again to **FIGS. 1** and **2****,** the attachment portion **112** on the top end **108** of the container **102** and the attachment portion **124** on the fruit plucking attachment **114** together define a snap fit arrangement **144.** In a preferred embodiment, the at least one snap fit arrangement **144** defined in the top end **108** of the container **102** includes a socket, as will be explained in detail later herein. In an alternative embodiment, the at least one snap fit feature defined in the top end **108** of the container **102** could include a plurality of sockets.

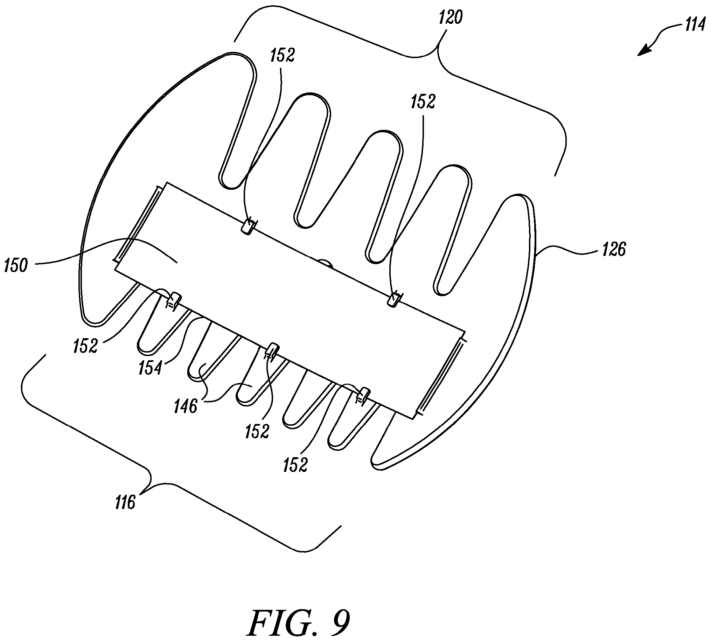

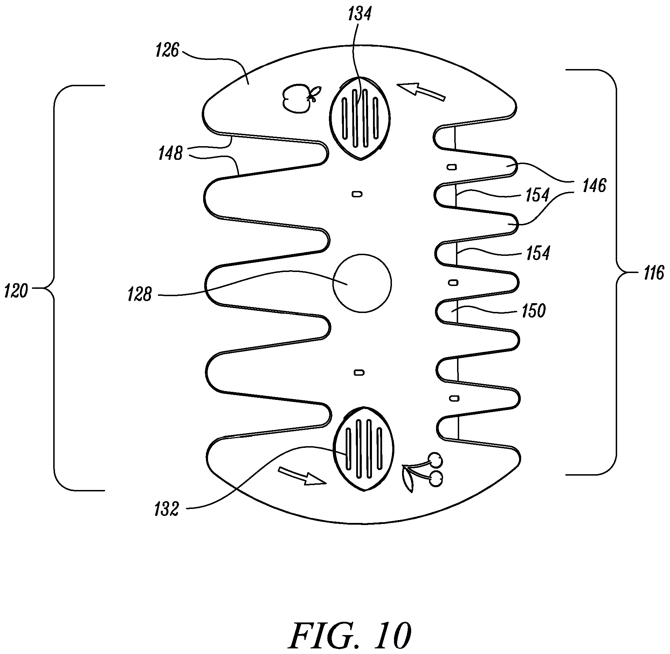

According to an embodiment shown in **FIGS. 9** and **10****,** the fruit plucking attachment **114** further comprises a first laminate **126** having a middle plug **128** protruding therefrom. This middle plug **128** is positioned to correspond with a middle socket **130** defined in the top end **108** of the container **102** and located adjacent to the arcuate opening **110** as shown best in the view of **FIG. 2**. Referring again to **FIG. 9****,** the first laminate **126** also includes a first plug **132** and a second plug **134** that are positioned equidistantly from the middle plug **128** for interchangeably engaging with a first socket **136** and a second socket **138** located equidistantly from the middle socket **130** respectively.

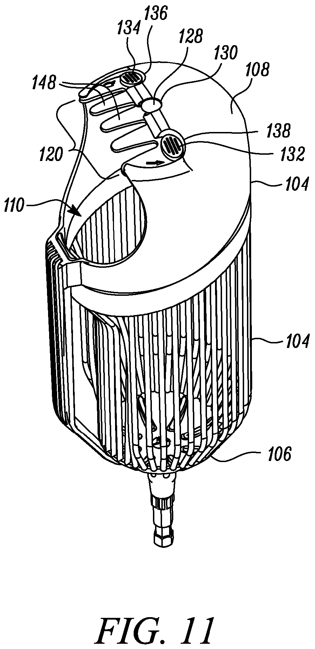

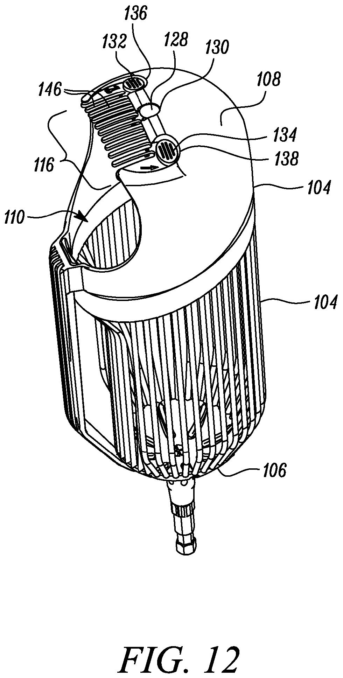

As shown in **FIG. 11****,** the fruit plucking attachment **114** is shown disposed in its first position. The first position of the fruit plucking attachment **114** can be regarded when the first plug **132** is engaged with the first socket **136** and the second plug **134** is engaged with the second socket **138.** Conversely, as shown in **FIG. 12****,** the fruit plucking attachment **114** is disposed in its second position. The second position of the fruit plucking attachment **114** can be regarded when the first plug **132** is engaged with the second socket **138** and the second plug **134** is engaged with the first socket **136.**

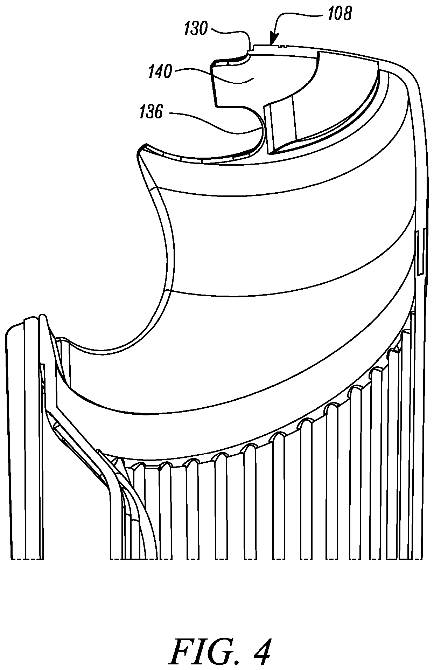

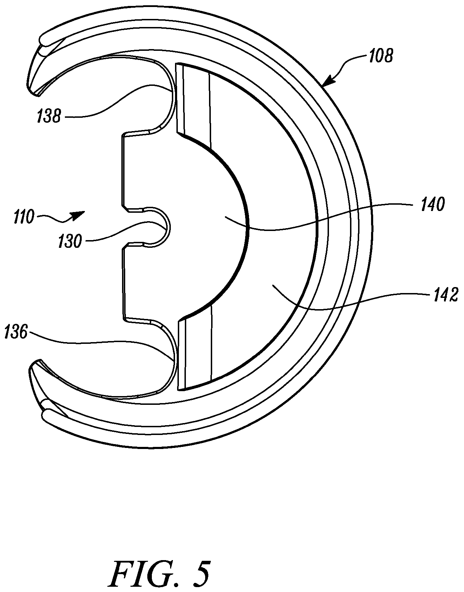

Also, in an embodiment as best shown in **FIGS. 3****,** **4****,** and **5****,** an inner surface **140** of the top end **108** of the container **102** is adapted to define a groove **142** thereon. This groove **142** is adapted to arcuately extend from the first socket **136** to the second socket **138.** Also, this groove **142** is adapted to facilitate movement of one of the first and second plugs **132, 134** when the fruit plucking attachment **114** is disposed between its first and second positions.

It will be appreciated that in the foregoing embodiment, the fruit plucking attachment **114** would be made flexible, at least along a plane intersecting the first and second plugs **132, 134,** so that in order to position the fruit plucking attachment **114** in its first or second position, one of the first and second plugs **132, 134** may be pressed downwardly until the pressed one of the first and second plugs **132, 134** slides into the groove **142** for changing the position of the fruit plucking attachment **114** while the attachment portion **124** on the fruit plucking attachment **114** continues to remain engaged with the attachment portion **112** defined by the top end **108** of the container **102.**

Although the rotation of the fruit plucking attachment **114** has been explained in reference with the fruit plucking attachment **114** being in an engaged position with the top end **108** of the container **102,** it will be acknowledged that such rotating operation of the engaged fruit plucking attachment **114** is one of the possible ways of changing the position of the fruit plucking attachment **114** *i.e.*, for positioning the fruit plucking attachment **114** in its first or second position. It is hereby contemplated that in other embodiments of the present invention, the groove **142** on the inner surface **140** of the top end **108** could be altogether omitted.

In fact, regardless of whether the groove **142** is present or omitted, the fruit plucking attachment **114** could also be disengaged from the top end **108** of the container **102** and thereafter, the fruit plucking attachment **114** could be rotated into a desired position *i*.*e*., the first or the second position, prior to being re-engaged with the top end **108** of the container **102.** Persons skilled in the art will therefore acknowledge that such structural modifications could be contemplated in the interest of convenience in operationally executing a change in the positions of the fruit plucking attachment **114.** Accordingly, it may be understood that such structural modifications do not limit the scope of the present invention. Rather, such structural changes may be construed as being within the scope of the present invention unless specified otherwise by the appended claims.

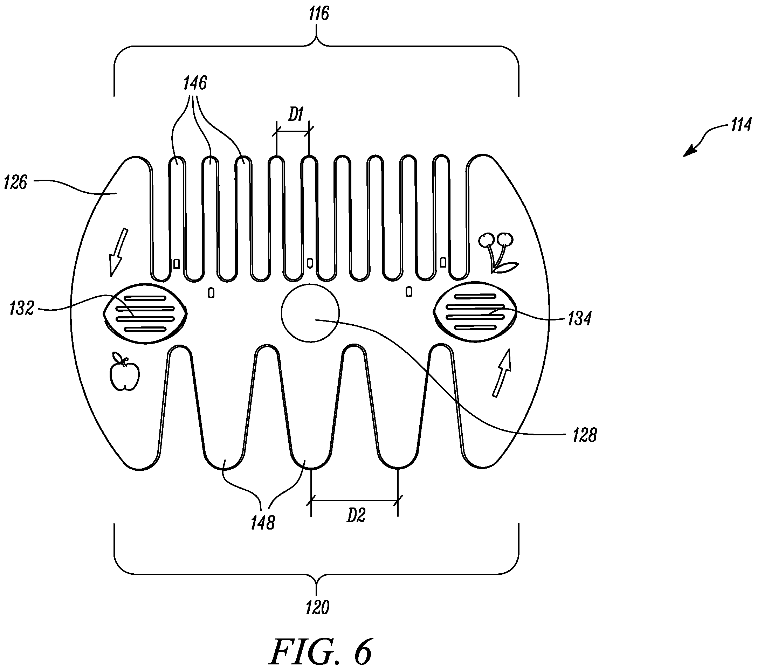

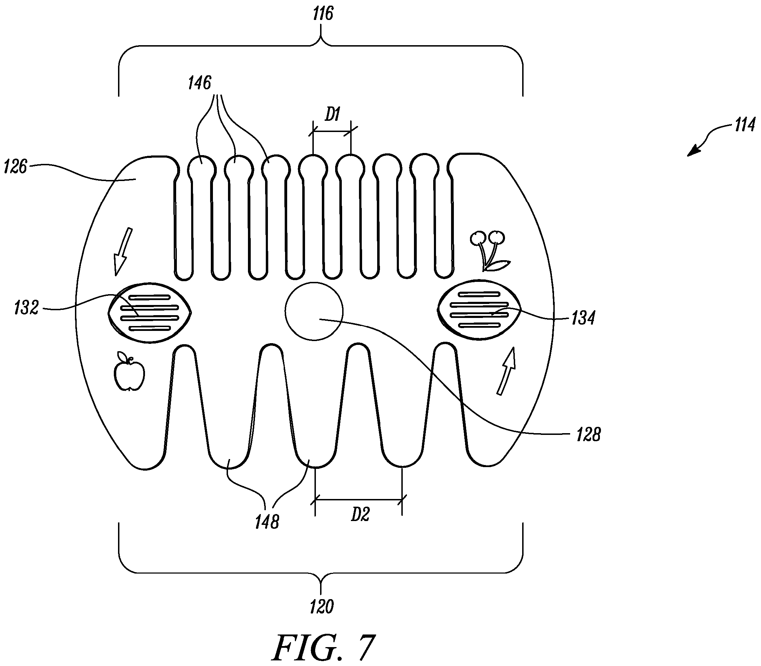

In an embodiment as shown in **FIGS. 6****,** **7****,** and **8****,** the first comb **116** is structured to define a first set of tines **146** such that adjacently located tines from the first set of tines **146** are spaced apart at a first pre-determined amount of distance **D1** from one another. Also, the second comb **120** is structured to define a second set of tines **148** such that adjacently located tines from the second set of tines **148** are spaced apart at a second pre-determined amount of distance **D2** from one another. Also, it can be understood from **FIGS. 6****,** **7****,** and **8****,** that in embodiments herein, the configurations *i.e.*, a size and shape of each tine from the first and second set of tines **146, 148** can be varied to suit specific requirements of a harvesting application.

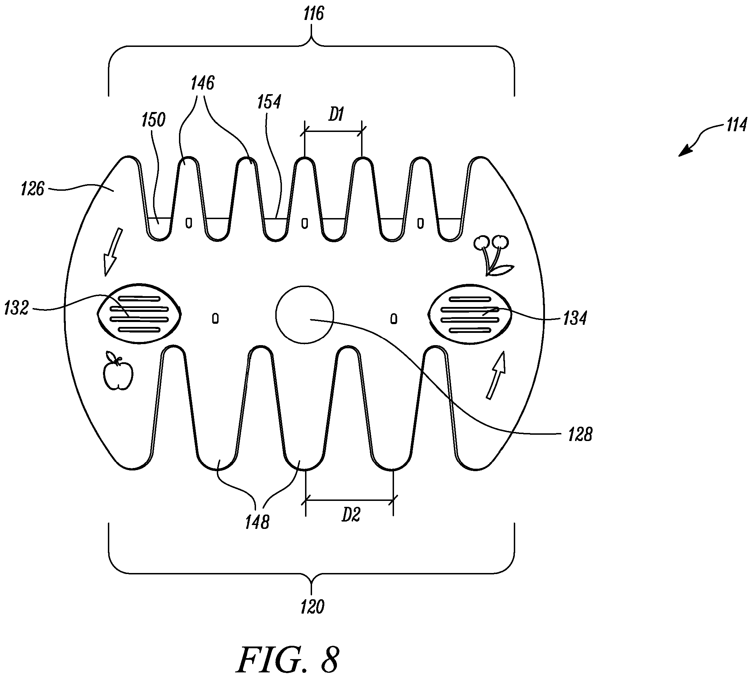

Further, referring to **FIGS. 8****,** **9****,** and **10****,** the fruit plucking attachment **114** comprises a second laminate **150** secured to the first laminate **126.** In an embodiment as best shown in **FIG. 9****,** the second laminate **150** may be secured to the first laminate **126** with the help of notches **152.** Although notches **152** have been disclosed herein, persons skilled in the art will acknowledge that other securement means may be contemplated in lieu of the notches **152** disclosed herein for securing the second laminate **150** to the first laminate **126.**

Furthermore, the second laminate **150** is sized to project forwardly of the first and second sets of tines **146, 148** and terminate prior to ends of the first and second sets of tines **146, 148.** In an exemplary embodiment as shown best in **FIGS. 8****,** **9****,** and **10****,** the second laminate **150** projects forwardly of the first set of tines **146** and terminate prior to ends of the first set of tines **146,** however, in other embodiments, the second laminate **150** could also extend forwardly of the second set of tines **148** that form part of the second comb **120.** The second laminate **150** could advantageously have one or more cutting edges **154** that help severe the connection of a fruit from a shrub or a tree.

In embodiments herein, although the fruit plucking attachment **114** has been explained as merely including the first and second combs **116, 120,** according to other embodiments of the present invention, the fruit plucking attachment **114** may include more than two combs. For example, the fruit plucking attachment **114** could include third and fourth combs (not shown) that may be disposed in a diametrically opposing relation to the first and second combs **116, 120.**

According to a non-claimed embodiment of the present invention, the fruit plucking attachment **114** disclosed herein may be manufactured, preferably, using a three-dimensional (3-D) printing process. Accordingly, a user of the fruit plucking attachment **114** may be provided with a data file having pre-stored instructions to print the fruit plucking attachment **114** using a three-dimensional (3-D) printer. As such, the data file representative of the fruit plucking attachment **114** may be presented in a digital format to the user for executing the pre-stored instructions in the data file with use of the 3-D printer. The data file could include any type of data file, commonly known to persons skilled in the art, including, but not limited to, data files of the types that are executable on modeling software platforms such as CATIA^{®}, AutoCAD^{®}, Creo^{®} and the like.

According to a non-claimed embodiment of the present invention, for manufacturing the fruit plucking attachment **114,** one or more materials may be used to form the fruit plucking attachment **114.** For instance, the fruit plucking attachment **114** may be formed using a metal, a plastic, a thermoplastic polymer, a composite, or even other types of materials known to persons skilled in the art. In one example, the fruit plucking attachment **114** could be made of two or more metals. In another example, the fruit plucking attachment **114** could be made of two or more types of plastics. In yet a further embodiment the fruit plucking attachment **114** could be made out of a combination of different material, in particular the a section made from metal to cut the stems of the fruits to be harvested and the remaining section made of plastics, further it could be possible that the different sections comprising different materials do overlap.

According to a non-claimed embodiment of the present invention, markings or indicia may be provided on one or both sides of a top surface of the fruit plucking attachment **114** to indicate a type of fruit, for example, apples or cherries for which a corresponding type of comb, for example, the first comb **116** or the second comb **120** needs to be brought into position by the user on the container **102** so as to be facing the opening **110** before the fruit harvesting tool **100** would be used to pluck the fruit.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Fruit harvesting tool
- **102**: Container
- **104**: Circumferential wall
- **106**: Closed bottom end of container
- **108**: Top end of container
- **110**: Arcuate opening
- **112**: Attachment portion
- **114**: Fruit plucking attachment
- **116**: First comb
- **118**: First side
- **120**: Second comb
- **122**: Second side
- **124**: Another attachment portion located on the fruit plucking attachment
- **126**: First laminate
- **128**: Middle plug
- **130**: Middle socket
- **132**: First plug
- **134**: Second plug
- **136**: First socket
- **138**: Second socket
- **140**: Inner surface of top end of container
- **142**: Groove
- **144**: Snap fit arrangement
- **146**: First set of tines
- **148**: Second set of tines
- **150**: Second laminate
- **152**: Notches
- **154**: Cutting edges
- **P**: Perimeter
- **D1**: First pre-determined amount of distance
- **D2**: Second pre-determined amount of distance

## Claims

1. A fruit harvesting tool **(100)** comprising:
a container **(102)** having a circumferential wall **(104)** extending between a closed bottom end **(106)** and a top end **(108)** of the container **(102),** the circumferential wall **(104)** and the top end **(108)** each defining at least a portion of an arcuate opening **(110)** extending along a perimeter **(P)** of the container **(102)** between the circumferential wall **(104)** and the top end **(108);** and
a fruit plucking attachment **(114)** is selectively engaged with the top end **(108)** of the container **(102),** the fruit plucking attachment **(114)** comprising a first comb **(116)** at a first side **(118)** and a second comb **(120)** at a second side **(122)** of the fruit plucking attachment **(114),** wherein the top end **(108)** defines an inner surface (140),
whereby the top end **(108)** defines an attachment portion **(112)** located adjacent to the arcuate opening **(110);** and
the fruit plucking attachment **(114)** further comprising another attachment portion **(124)** located thereon to correspond with the attachment portion **(112)** defined by the top end **(108)** of the container **(102)** such that the fruit plucking attachment **(114)** is selectively rotatable between a first position and a second position to allow one of the first comb **(116)** and the second comb **(120)** to be disposed into the arcuate opening **(110);**
wherein the fruit plucking attachment (114) further comprises a first laminate (126) having a plurality of plugs protruding therefrom;
the fruit harvesting tool being **characterized in that** the plurality of plugs protrude such that a middle plug **(128)** is positioned to correspond with a middle socket **(130)** defined in the top end **(108)** and located adjacent to the arcuate opening **(110),** and a first plug **(132)** and a second plug **(134)** are positioned equidistantly from the middle plug **(128)** for interchangeably engaging with a first socket **(136)** and a second socket **(138)** located equidistantly from the middle socket **(130)** respectively.

2. The fruit harvesting tool **(100)** according to claim 1, **characterized in that**, the attachment portion **(112)** on the top end **(108)** of the container **(102)** and the attachment portion **(124)** on the fruit plucking attachment **(114)** together define a snap fit arrangement **(144).**

3. The fruit harvesting tool **(100)** according to claim 2, **characterized in that**, the at least one snap fit arrangement **(144)** defined in the top end **(108)** of the container **(102)** includes at least one socket.

4. The fruit harvesting tool **(100)** according to any of the preceding claims, **characterized in that**, the fruit plucking attachment **(114)** is in its first position when the first plug **(132)** is engaged with the first socket **(136)** and the second plug **(134)** is engaged with the second socket **(138),** and wherein the fruit plucking attachment **(114)** is in its second position when the first plug **(132)** is engaged with the second socket **(138)** and the second plug **(134)** is engaged with the first socket **(136).**

5. The fruit harvesting tool **(100)** according to any one of the preceding claims, **characterized in that**, the first comb **(116)** is structured to define a first set of tines **(146)** such that adjacently located tines from the first set of tines **(146)** are spaced apart at a first pre-determined amount of distance (**D1**) from one another, and the second comb **(120)** is structured to define a second set of tines **(148)** such that adjacently located tines from the second set of tines **(148)** are spaced apart at a second pre-determined amount of distance (D2) from one another.

6. The fruit harvesting tool **(100)** according to any of the preceding claims, **characterized in that**, the fruit plucking attachment **(114)** comprises a second laminate **(150)** secured to the first laminate **(126)** with the help of notches **(152).**

7. The fruit harvesting tool **(100)** according to claim 6, **characterized in that**, the second laminate **(150)** is sized to project forwardly of the first and second sets of tines **(146, 148)** and terminate prior to ends of the first and second sets of tines **(146, 148).**

8. The fruit harvesting tool **(100)** according to claims 3-7, **characterized in that**, the inner surface **(140)** of the top end **(108)** of the container **(102)** is adapted to define a groove **(142)** thereon, the groove **(142)** adapted to arcuately extend from the first socket **(136)** to the second socket **(138).**

9. The fruit harvesting tool **(100)** according to claim 8, **characterized in that**, the groove **(142)** is adapted to facilitate movement of one of the first and second plugs **(132, 134)** when the fruit plucking attachment **(114)** is disposed between its first and second positions.

## Patentansprüche

1. Obsterntewerkzeug **(100),** umfassend:
einen Behälter **(102)** mit einer umlaufenden Wand **(104),** die sich zwischen einem geschlossenen unteren Ende **(106)** und einem oberen Ende **(108)** des Behälters **(102)** erstreckt, wobei die umlaufende Wand **(104)** und das obere Ende **(108)** jeweils mindestens einen Abschnitt einer bogenförmigen Öffnung **(110)** definieren, die sich entlang eines Umfangs **(P)** des Behälters **(102)** zwischen der umlaufenden Wand **(104)** und dem oberen Ende **(108)** erstreckt; und
einen Obstpflückaufsatz **(114),** der selektiv mit dem oberen Ende **(108)** des Behälters **(102)** in Eingriff steht, wobei der Obstpflückaufsatz **(114)** einen ersten Kamm **(116)** auf einer ersten Seite **(118)** und einen zweiten Kamm **(120)** auf einer zweiten Seite **(122)** des Obstpflückaufsatzes **(114)** umfasst,
wobei das obere Ende **(108)** eine innere Oberfläche (140) definiert,
wobei das obere Ende **(108)** einen Aufsatzabschnitt **(112)** definiert, der sich neben der bogenförmigen Öffnung **(110)** befindet; und
wobei der Obstpflückaufsatz **(114)** ferner einen weiteren Aufsatzabschnitt **(124)** darauf befindlich umfasst, um dem Aufsatzabschnitt **(112)** zu entsprechen, der durch das obere Ende **(108)** des Behälters **(102)** definiert wird, so dass der Obstpflückaufsatz **(114)** selektiv zwischen einer ersten Position und einer zweiten Position drehbar ist, um einem von dem ersten Kamm **(116)** und dem zweiten Kamm **(120)** zu ermöglichen, in der bogenförmigen Öffnung **(110)** angeordnet zu werden;
wobei der Obstpflückaufsatz (114) ferner ein erstes Laminat (126) mit einer Vielzahl daraus vorragender Stecker umfasst;
wobei das Obsterntewerkzeug **dadurch gekennzeichnet ist, dass** die Vielzahl von Steckern derart vorragt, dass ein mittlerer Stecker **(128)** positioniert ist, um einer mittleren Buchse **(130)** zu entsprechen, die im oberen Ende **(108)** definiert ist und sich neben der bogenförmigen Öffnung **(110)** befindet, und ein erster Stecker **(132)** und ein zweiter Stecker **(134)** im gleichen Abstand vom mittleren Stecker **(128)** positioniert sind, um austauschbar mit einer ersten Buchse **(136)** und einer zweiten Buchse **(138)** in Eingriff zu gelangen, die sich in einem gleichen Abstand von der mittleren Buchse **(130)** befinden.

2. Obsterntewerkzeug **(100)** nach Anspruch 1,
**dadurch gekennzeichnet, dass** der Aufsatzabschnitt **(112)** am oberen Ende **(108)** des Behälters **(102)** und der Aufsatzabschnitt **(124)** am Obstpflückaufsatz **(114)** zusammen eine Schnappverschlussanordnung **(144)** bilden.

3. Obsterntewerkzeug **(100)** nach Anspruch 2,
**dadurch gekennzeichnet, dass** die mindestens eine Schnappverschlussanordnung **(144),** die im oberen Ende **(108)** des Behälters **(102)** definiert ist, mindestens eine Buchse einschließt.

4. Obsterntewerkzeug **(100)** nach einem der vorstehenden Ansprüche,
**dadurch gekennzeichnet, dass** der Obstpflückaufsatz **(114)** in seiner ersten Position ist, wenn der erste Stecker **(132)** mit der ersten Buchse **(136)** in Eingriff steht und der zweite Stecker **(134)** mit der zweiten Buchse **(138)** in Eingriff steht, und wobei der Obstpflückaufsatz **(114)** in der zweiten Position ist, wenn der erste Stecker **(132)** mit der zweiten Buchse **(138)** in Eingriff steht und der zweite Stecker **(134)** mit der ersten Buchse **(136)** in Eingriff steht.

5. Obsterntewerkzeug **(100)** nach einem der vorstehenden Ansprüche,
**dadurch gekennzeichnet, dass** der erste Kamm **(116)** strukturiert ist, um einen ersten Satz Zinken **(146)** zu definieren, so dass nebeneinander befindliche Zinken des ersten Satzes Zinken **(146)** in einem ersten vorbestimmten Abstand **(D1)** voneinander beabstandet sind, und der zweite Kamm **(120)** strukturiert ist, um einen zweiten Satz Zinken **(148)** zu definieren, so dass nebeneinander befindliche Zinken des zweiten Satzes Zinken **(148)** in einem zweiten vorbestimmten Abstand **(D2)** voneinander beabstandet sind.

6. Obsterntewerkzeug **(100)** nach einem der vorstehenden Ansprüche,
**dadurch gekennzeichnet, dass** der Obstpflückaufsatz **(114)** ein zweites Laminat **(150)** umfasst, das am ersten Laminat **(126)** mit Hilfe von Kerben **(152)** befestigt ist.

7. Obsterntewerkzeug **(100)** nach Anspruch 6,
**dadurch gekennzeichnet, dass** das zweite Laminat **(150)** bemessen ist, um von dem ersten und zweiten Satz Zinken **(146, 148)** nach vorne vorzuragen und vor den Enden des ersten und zweiten Satzes Zinken **(146, 148)** endet.

8. Obsterntewerkzeug **(100)** nach Ansprüchen 3 bis 7,
**dadurch gekennzeichnet, dass** die innere Oberfläche **(140)** des oberen Endes **(108)** des Behälters **(102)** dazu ausgelegt ist, um eine Kerbe **(142)** daran zu definieren, wobei die Kerbe **(142)** dazu ausgelegt ist, um sich bogenförmig von der ersten Buchse **(136)** zur zweiten Buchse **(138)** zu erstrecken.

9. Obsterntewerkzeug **(100)** nach Anspruch 8,
**dadurch gekennzeichnet, dass** die Kerbe **(142)** dazu ausgelegt ist, um eine Bewegung eines von dem ersten und zweiten Stecker **(132, 134)** zu erleichtern, wenn der Obstpflückaufsatz **(114)** zwischen seiner ersten und zweiten Position angeordnet ist.

## Revendications

1. Outil de récolte de fruits **(100)** comprenant :
un récipient **(102)** ayant une paroi circonférentielle **(104)** s'étendant entre une extrémité inférieure fermée **(106)** et une extrémité supérieure **(108)** du récipient **(102),** la paroi circonférentielle **(104)** et l'extrémité supérieure **(108)** définissant chacune au moins une partie d'une ouverture en arc de cercle **(110)** s'étendant le long d'un périmètre **(P)** du récipient **(102)** entre la paroi circonférentielle **(104)** et l'extrémité supérieure **(108)** ; et
un accessoire de cueillette de fruits **(114)** est sélectivement mis en prise avec l'extrémité supérieure **(108)** du récipient **(102),** l'accessoire de cueillette de fruits **(114)** comprenant un premier peigne **(116)** sur un premier côté **(118)** et un second peigne **(120)** sur un second côté **(122)** de l'accessoire de cueillette de fruits **(114),**
dans lequel l'extrémité supérieure **(108)** définit une surface intérieure (140),
selon lequel l'extrémité supérieure **(108)** définit une partie de fixation **(112)** située à côté de l'ouverture en arc de cercle **(110)** ; et
l'accessoire de cueillette des fruits **(114)** comprend en outre une autre partie de fixation **(124)** située sur celui-ci pour correspondre à la partie de fixation **(112)** définie par l'extrémité supérieure **(108)** du récipient **(102)** de sorte que l'accessoire de cueillette des fruits **(114)** peut tourner sélectivement entre une première position et une seconde position pour permettre à l'un du premier peigne **(116)** et du second peigne **(120)** d'être disposé dans l'ouverture en arc de cercle **(110)** ;
dans lequel l'accessoire de cueillette des fruits (114) comprend en outre un premier laminé (126) ayant une pluralité de bouchons faisant saillie dans celui-ci ;
l'outil de récolte des fruits est **caractérisé en ce que** la pluralité de bouchons fait saillie de telle sorte qu'un bouchon central **(128)** est positionné pour correspondre à une prise centrale **(130)** définie dans l'extrémité supérieure **(108)** et située à côté de l'ouverture en arc **(110),** et qu'un premier bouchon **(132)** et un second bouchon **(134)** sont positionnés à équidistance du bouchon central **(128)** pour venir en prise de manière interchangeable avec une première prise **(136)** et une seconde prise **(138)** situées à équidistance de la prise centrale **(130),** respectivement.

2. Outil de récolte de fruits **(100)** selon la revendication 1,
**caractérisé en ce que** la partie de fixation **(112)** sur l'extrémité supérieure **(108)** du récipient **(102)** et la partie de fixation **(124)** sur l'accessoire de cueillette de fruits **(114)** définissent ensemble un arrangement d'encliquetage **(144).**

3. Outil de récolte de fruits **(100)** selon la revendication 2,
**caractérisé en ce que** l'au moins un dispositif d'encliquetage **(144)** défini dans l'extrémité supérieure **(108)** du récipient **(102)** comporte au moins une prise.

4. Outil de cueillette de fruits **(100)** selon l'une quelconque des revendications précédentes, **caractérisé en ce que** l'accessoire de cueillette de fruits **(114)** est dans sa première position, lorsque le premier bouchon **(132)** est mis en prise dans la première prise **(136)** et que le second bouchon **(134)** est mis en prise dans la seconde prise **(138),** et **en ce que** l'accessoire de cueillette de fruits **(114)** est dans sa seconde position lorsque le premier bouchon **(132)** est mis en prise dans la seconde prise **(138)** et que le second bouchon **(134)** est mis en prise dans la première prise **(136).**

5. Outil de récolte de fruits **(100)** selon l'une quelconque des revendications précédentes, **caractérisé en ce que** le premier peigne **(116)** est structuré pour définir un premier ensemble de dents **(146)** de sorte que les dents situées de manière adjacente dans le premier ensemble de dents **(146)** sont espacées d'une première distance prédéterminée **(D1)** l'une de l'autre, et le second peigne **(120)** est structuré de manière à définir un second ensemble de dents **(148)** de sorte que les dents situées à proximité les unes des autres dans le second ensemble de dents **(148)** sont espacées d'une seconde distance prédéterminée **(D2)** les unes des autres.

6. Outil de récolte de fruits **(100)** selon l'une quelconque des revendications précédentes, **caractérisé en ce que** l'accessoire de cueillette de fruits **(114)** comprend un second laminé **(150)** fixé au premier laminé **(126)** à l'aide d'encoches **(152).**

7. Outil de récolte de fruits **(100)** selon la revendication 6,
**caractérisé en ce que** le second laminé **(150)** est dimensionné pour faire saillie vers l'avant des premier et second ensembles de dents **(146, 148)** et se terminer avant les extrémités des premier et second ensembles de dents **(146, 148).**

8. Outil de récolte de fruits **(100)** selon les revendications 3 à 7,
**caractérisé en ce que** la surface intérieure **(140)** de l'extrémité supérieure **(108)** du récipient **(102)** est adaptée pour définir une rainure **(142)** sur celle-ci, la rainure **(142)** étant adaptée pour s'étendre en arc de cercle de la première prise **(136)** à la seconde prise **(138).**

9. Outil de récolte de fruits **(100)** selon la revendication 8,
**caractérisé en ce que** la rainure **(142)** est adaptée pour faciliter le mouvement de l'un des premiers et seconds bouchons **(132, 134),** lorsque l'accessoire de cueillette de fruits **(114)** est disposé entre sa première et sa seconde position.
